# EUROPEAN PATENT SPECIFICATION

(11) **EP 0 970 996 B1**
(45) Date of publication and mention of the grant of the patent: **28.01.2004**
(21) Application number: 98850116.9
(22) Date of filing: 03.07.1998
(51) Int. Cl.: C08L 69/00, A61L 27/00, A61L 29/00

(54) **Polymer blend for producing medical devices**
Polymermischung zur Herstellung von medizinischen Vorrichtungen
Mélange de polymères pour la fabrication de dispositifs médicaux

(43) Date of publication of application: 12.01.2000
(73) Proprietor: Becton Dickinson Infusion Therapy AB, 25106 Helsingborg (SE)
(72) Inventor: Knutsson, Per Anders, 256 55 Helsingborg (SE); Wahlberg, Ulf Harry, 256 57 Ramlösa (SE)
(74) Representative: Bengtsson, Peggy Katrin

(56) References cited:
- EP-A- 0 152 825
- US-A- 5 137 688
- US-A- 5 476 893

## Description

### Technical field of the Invention

The present invention relates to a material blend, intended for medical disposable articles which are submitted to radiation sterilization. It further relates to a method of preparing such a blend.

### Background art

Various disposable articles used for medical purposes are submitted to radiation sterilization to ensure sufficient kill of micro-organisms. The material of these articles must fulfil requirements regarding transparency, cracking resistance and ability to endure radiation sterilization. Further, low material and manufacturing costs are essential for disposable articles.

The demand for transparency is particularly expressed regarding connectors (for example Luer-connectors) and stopcocks, through which a passing fluid must be visible. Especially in the stopcocks a good cracking resistance is also needed, since the ports in the housing are submitted to considerable tensional forces. Generally, lipid solutions are known to create great tensions as they minimise the friction, and some of these do also have a negative chemical influence.

Today, disposable articles like stopcocks is made from polycarbonate materials, which are commercially available in several qualities. One way of describing the quality of a polycarbonate material is by way of its melt flow index (MFI). The MFI is a measure of the length of the molecular chain of the polycarbonate, and thereby signifies its viscosity. A low MFI signifies a long polymer chain and a good cracking resistance of the polycarbonate. Polycarbonates used for articles as mentioned above have a MFI around 4. These provide good cracking resistance, but have a disadvantage in becoming discoloured (yellow) when submitted to radiation. The discoloration increases when the radiation dose to the material increases. The yellow colour which occur on the articles when radiation sterilized could be covered by a smoke colouring of the material. The colour agents added to the material to provide the smoke-colour result in an extra cost and the desired colourlessness is still not achieved.

Radiation stabilized polycarbonate materials which are designed to become transparent when submitted to a certain dose of radiation are also available. The colour of these materials, e g blue, vanishes as the material is submitted to an increasing radiation dose. Unfortunately, these materials cannot be obtained with an unaffected MFI. The radiation stabilized materials have a higher MFI and consequently a lower cracking resistance than the polycarbonate mentioned above. The best commercially available radiation stabilized material has an MFI at about 6, which is not sufficient for all purposes, especially not for high quality connectors and stopcocks.

US-A-5 137 688 discloses a composition comprising an aromatic polycarbonate resin and an amorphous polyamide resin. This composition improves the colour in thermoplastic articles molded from the composition which been irradiated with ionizing radiation, by using a polycarbonate resin that turns yellow and amorphous nylon that turns blue-purple with gamma ray irradiation.

Since the problem of discoloration of stopcocks when radiation sterilized has not been solved, most manufacturers use gas sterilization instead of radiation sterilization. However, 100% sterility cannot be achieved or verified at all surfaces using conventional gas sterilization methods. Especially the mating surface between the tap and the stopcock housing is particularly difficult to sterilize. Besides, radiation sterilization has other advantages to gas sterilization, concerning e. g. improved working environment and less pollution.

### Summary of the Invention

It is therefore the aim of this invention to provide a material intended for radiation sterilization which is sufficiently cracking resistant, transparent and colourless for optimal use in medical disposable articles. It must also be possible to prepare from commercially available materials, and the tolerances for manufacturing variations must be rather wide, otherwise the production cost will be too high for disposable articles. This aim is reached by a material blend that consists of a cracking resistant polycarbonate material and a radiation stabilized polycarbonate material, said cracking resistant polycarbonate material being of the type increasingly discoloured when submitted to irradiation, and
said radiation stabilized polycarbonate material being of the type which decreasing in colour when submitted to irradiation and finally becoming colourless when submitted to a transparency radiation dose,
said colour of the radiation stabilized polycarbonate material is the complementary colour of said discoloration occurring in the cracking resistant material due to irradiation,
wherein said material blend consists of a proportion of cracking resistant material of 20-80% and a proportion of radiation stabilized material of 80-20%, that a predetermined radiation dose of 10-50 kGy is selectable, said predetermined radiation dose being smaller than said transparency radiation dose of the radiation stabilized material, and being such that the material blend, after irradiation with said predetermined radiation dose, is more transparent and colourless than anyone of the initial materials would be after irradiation with that same predetermined radiation dose.

To blend the two different polycarbonate materials, which alone cannot fulfil all the required requirements, gives a synergetic effect where the properties of the initial materials are combined and sometimes improved. Commercially available materials can advantageously be used.

The action of a predetermined radiation dose on the material blend is an important factor for the outcome of the radiation sterilized material blend. Even though the blend is sufficiently stable for such variations in the radiation dose which can occur in large scale manufacturing of articles.

Preferably the proportions and the radiation dose is chosen so that the material blend, after irradiation with said predetermined radiation dose has sufficient cracking resistance and transparency with regard to the intended use.

This is possible if the initial materials absorb different wavelengths of visible light. In such case the effect of the absorbtions can synergise to create a material blend which is more colourless than the initial materials. Since the discoloration of the cracking resistant material increases with the radiation dose, and the coloration of the radiation stabilized material usually decreases with the dose, it is possible to find an optimum dose, where the transparency of the blend is greater than it would be in one of the initial materials

Advantageously, the colour of the radiation stabilized material is the complementary colour of the discoloration occurring in the cracking resistant material due to irradiation. In this case, the blend can appear completely colourless, if the proportions and radiation dose are such that the amount of absorbed light of one colour and the amount of absorbed light of its complementary colour are equal in the blend. The radiation stabilized material must in this case remain e.g. blue to some degree, why the appropriate radiation dose to the blend must be less than the dose normally required to get a transparent radiation stabilized material. A decrease in radiation dose is possible without jeopardising the sterilization, if precautions for better cleanness are taken in preceding manufacturing steps.

The present invention consists also of a method of preparing such a blend.

### Detailed description of preferred embodiments of the Invention

The best results have beeh obtained using a cracking resistant polycarbonate material with an MFI value around 4. This material is often used in e.g. valves and connectors. The radiation stabilized material is of a recently developed type with an MFI value around 6. The radiation stabilized material has a blue colour, which is designed to fade away when the material is submitted to radiation, and the material is colourless at a radiation dose around 25-50 kGy. The cracking resistant material gets a yellow discoloration when irradiated.

Good results were obtained when the materials were blended in a 50%/50%- mix and submitted to a radiation dose of 15-35 kGy. Both β- and γ-radiation were used without noticeable differences in the result.

Blending tolerances of ± 5 percentage also give a sufficient result.

The range of functional doses must be rather wide, as irradiation of many irregularly shaped articles at a time will be done in manufacturing, and the absorbed dose of each mass unit of material is difficult to control under such conditions. Besides, the density of material can vary between different articles in a product range.

One could prepare other blending mixes for more specific irradiation doses for an optimum effect. This could advantageously be used when the absorbed dose is more easily contolled, as when sterilizing one or few articles at the time, or sterilizing very regularly shaped articles. The dose could also be more easily controlled using γ-radiation than β-radiation, due to their different absorption properties.

The proportions can obviously be different depending on the initial materials. With today's available materials, it is unlikely that a proportion of less then 20% of one of the materials should give a material blend with the desired properties. The colours of the initial materials can differ, as can their MFI-values. One could also imagine an extra coloration, like the smoke-colour used in prior art, added to one or both of the initial materials.

## Claims

1. A material blend, intended for medical disposable articles which are submitted to radiation sterilization,
**characterised in that** the material blend consists of a cracking resistant polycarbonate material and a radiation stabilized polycarbonate material,
said cracking resistant polycarbonate material being of the type increasingly discoloured when submitted to irradiation, and
said radiation stabilized polycarbonate material being of the type decreasing in colour when submitted to irradiation and finally becoming colourless when submitted to a transparency radiation dose,
said colour of the radiation stabilized polycarbonate material is the complementary colour of said discoloration occurring in the cracking resistant material due to irradiation,
wherein said material blend consists of a proportion of cracking resistant material of 20-80% and a proportion of radiation stabilized material of 80-20%, that a predetermined radiation dose of 10-50 kGy is selectable, said predetermined radiation dose being smaller than said transparency radiation dose of the radiation stabilized material, and being such that the material blend, after irradiation with said predetermined radiation dose, is more transparent and colourless than anyone of the initial materials would be after irradiation with that same predetermined radiation dose.

2. A material blend according to claim 1 **characterised in that** the material blend after irradiation with said predetermined radiation dose has sufficient cracking resistance and transparency with regard to the intended use.

3. A material blend according to any one of the claims 1-2,
**characterised in that** the proportions of the initial materials and the predetermined radiation dose are set so that the colour changes caused by the predetermined radiation dose create equal amounts of absorption of the two complementary colours in the resulting material blend, so that the material blend is essentially colourless after irradiation.

4. A material blend according to any one of the claims 1-3,
**characterised in that** the material blend consists a proportion of cracking resistant material of 45-55%, and preferably 50%, and a proportion of radiation stabilized material of 55-45%, and preferably 50%, respectively, and the radiation dose is 10-35 kGy.

5. A material blend according to any one of the claims 1-4,
**characterised in that** the cracking resistant material has a melt flow index equal to or less than 5, preferably less than 4.

6. A material blend according to any one of the claims 1-5,
**characterised in that** the radiation stabilized material has a melt flow index equal to or less than 7, preferably less than 6.

7. A method of preparing a material blend, intended for medical disposable articles which are submitted to radiation sterilization, **characterised in** blending a cracking resistant polycarbonate material and a radiation stabilized polycarbonate material,
said cracking resistant polycarbonate material being of the type increasingly discoloured when submitted to irradiation, and
said radiation stabilized polycarbonate material being of the type which decreasing in colour when submitted to irradiation and finally becoming colourless when submitted to a transparency radiation dose,
said colour of the radiation stabilized polycarbonate material is the complementary colour of said discoloration occurring in the cracking resistant material due to irradiation,
wherein said material blend consists of said materials, in such proportions that a predetermined radiation dose is selectable, said predetermined radiation dose being smaller than said transparency radiation dose of the radiation stabilized material, and being such that the material blend, after irradiation with
said predetermined radiation dose, is more transparent and colourless than anyone of the initial materials would be after irradiation with that same predetermined radiation dose.

## Patentansprüche

1. Materialmischung, beabsichtigt für medizinische Wegwerfartikel, die einer Bestrahlungssterilisierung unterzogen werden, **dadurch gekennzeichnet, dass** die Materialmischung aus einem reißfesten Polycarbonatmaterial und einem bestrahlungsstabilisierten Polycarbonatmaterial besteht,
wobei das reißfeste Polycarbonatmaterial von der Art ist, die sich zunehmend entfärbt, wenn sie einer Bestrahlung unterzogen wird und
wobei das bestrahlungsstabilisierte Polycarbonatmaterial von der Art ist, deren Farbe abnimmt, wenn es einer Bestrahlung unterzogen wird und schließlich farblos wird, wenn es einer TransparenzStrahlendosis unterzogen wird,
wobei die Farbe des bestrahlungsstabilisierten Polycarbonatmaterials die Komplementärfarbe der Entfärbung ist, die bei dem reißfesten Material aufgrund der Bestrahlung auftritt,
wobei die Materialmischung aus einem Anteil des reißfesten Materials von 20 bis 80% und einem Anteil des bestrahlungsstabilisierten Materials von 80 bis 20% besteht, wobei eine bestimmte Strahlendosis von 10 bis 50 kGy selektierbar ist, wobei die bestimmte Strahlendosis geringer ist als die TransparenzStrahlendosis des bestrahlungsstabilisierten Materials und dass die Materialmischung derartig ausgebildet ist, dass sie nach Bestrahlung mit der bestimmten Strahlendosis, transparenter und farbloser ist als irgendeines der anfänglichen Materialien nach der Bestrahlung mit derselben bestimmten Strahlendosis wäre.

2. Materialmischung gemäss Anspruch 1, **dadurch gekennzeichnet, dass** die Materialmischung nach der Bestrahlung mit der bestimmten Strahlendosis eine ausreichende Reißfestigkeit und Transparenz im Hinblick auf den beabsichtigten Verwendungszweck aufweist.

3. Materialmischung gemäß einem der Ansprüche 1 bis 2, **dadurch gekennzeichnet, dass** die Anteile der anfänglichen Materialien und die bestimmte Strahlendosis so eingestellt sind, dass die Farbänderungen, ausgelöst durch die bestimmte Strahlendosis, gleiche Mengen einer Absorption der beiden Komplementärfarben in der resultierenden Materialmischung auslösen, so dass die Materialmischung nach der Bestrahlung im wesentlichen farblos ist.

4. Materialmischung gemäss einem der Ansprüche 1 bis 3, **dadurch gekennzeichnet, dass** die Materialmischung aus einem Anteil eines reißfesten Materials von 45 bis 55% und vorzugsweise 50% und einem Anteil des bestrahlungsstabilisierten Materials von 55 bis 45% und vorzugsweise 50% besteht und dass die Strahlendosis 10 bis 35 kGy beträgt.

5. Materialmischung gemäss einem der Ansprüche 1 bis 4, **dadurch gekennzeichnet, dass** das reißfeste Material einen Schmelzflussindex von gleich oder weniger als 5, vorzugsweise weniger als 4 aufweist.

6. Materialmischung gemäß einem der Ansprüche 1 bis 5, **dadurch gekennzeichnet, dass** das bestrahlungsstabilisierte Material einen Schmelzflussindex von gleich oder weniger als 7, vorzugsweise weniger als 6 aufweist.

7. Verfahren zur Herstellung einer Materialmischung, beabsichtigt für medizinische Wegwerfartikel, die einer Bestrahlungssterilisierung unterzogen werden, **dadurch gekennzeichnet, dass** ein reißfestes Polycarbonatmaterial und ein strahlungsstabilisiertes Polycarbonatmaterial gemischt werden,
dass das reißfeste Polycarbonatmaterial von der Art ist, die zunehmend entfärbt wird, wenn es einer Bestrahlung unterzogen wird und
wobei das bestrahlungsstabilisierte Polycarbonatmaterial von der Art ist, dessen Farbe abnimmt, wenn es einer Bestrahlung unterzogen wird und schließlich farblos wird, wenn es einer TransparenzStrahlendosis unterzogen wird,
wobei die Farbe des bestrahlungsstabilisierten Polycarbonatmaterials die Komplementärfarbe der Entfärbung ist, die bei dem reißfesten Material aufgrund der Bestrahlung auftritt,
wobei die Materialmischung in derartigen Anteilen aus den Materialien besteht, dass eine bestimmte Strahlendosis selektierbar ist, wobei die bestimmte Strahlendosis geringer ist als die Transparenzstrahlendosis des bestrahlungsstabilisierten Materials und so gewählt ist, dass die Materialmischung nach der Bestrahlung mit der bestimmten Strahlendosis transparenter und farbloser ist als irgendeines der anfänglichen Materialien nach einer Bestrahlung mit derselben bestimmten Strahlendosis sein würde.

## Revendications

1. Mélange de matériaux, destiné à des articles médicaux jetables qui sont soumis à une stérilisation par radiation, **caractérisé en ce que** le mélange de matériaux comprend un matériau de polycarbonate résistant aux fissurations, et un matériau de polycarbonate stabilisé par radiation, ledit matériau de polycarbonate résistant aux fissurations étant du type à décoloration croissante lorsqu'il est soumis à une irradiation, et
ledit matériau de polycarbonate stabilisé par radiation étant du type à coloration décroissante lorsqu'il est soumis à une irradiation et devenant finalement incolore lorsqu'il est soumis à une dose de radiation de transparence,
ladite couleur du matériau de polycarbonate stabilisé par radiation est la couleur complémentaire de ladite décoloration ayant lieu dans le matériau résistant aux fissurations due à l'irradiation,
dans lequel ledit mélange de matériaux comprend une proportion de matériau résistant aux fissurations de 20 à 80 % et une proportion de matériau stabilisé par radiation de 80 à 20 %, **en ce qu'**une dose de radiation prédéterminée de. 10 à 50 kGy peut être choisie, ladite dose de radiation prédéterminée étant inférieure à ladite dose de radiation de transparence du matériau stabilisé par radiation, et étant telle que le mélange de matériaux, après irradiation avec ladite dose de radiation prédéterminée, est plus transparent et plus incolore que l'un quelconque des matériaux de départ ne le serait après une irradiation avec la même dose de radiation prédéterminée.

2. Mélange de matériaux selon la revendication 1, **caractérisé en ce que** le mélange de matériaux après une irradiation avec ladite dose de radiation prédéterminée a une résistance aux fissurations et une transparence suffisantes pour l'utilisation prévue.

3. Mélange de matériaux selon l'une des revendications 1 et 2, **caractérisé en ce que** les proportions des matériaux de départ et la dose de radiation prédéterminée sont définies de manière à ce que les changements de couleurs provoqués par la dose de radiation prédéterminée créent des quantités égales d'absorption des deux couleurs complémentaires dans le mélange de matériaux résultant, de sorte que le mélange de matériaux est sensiblement incolore après l'irradiation.

4. Mélange de matériaux selon l'une des revendications 1 à 3, **caractérisé en ce que** le mélange de matériaux comprend une proportion de matériau résistant aux fissurations de 45 à 55 %, et de préférence de 50 %, et une proportion de matériau stabilisé par radiation de 55 à 45 %, et de préférence de 50 %, respectivement, et la dose de radiation est de 10 à 35 kGy.

5. Mélange de matériaux selon l'une des revendications 1 à 4, **caractérisé en ce que** le matériau résistant aux fissurations a un indice de fusion inférieur ou égal à 5, de préférence inférieur à 4.

6. Mélange de matériaux selon l'une des revendications 1 à 5, **caractérisé en ce que** le matériau stabilisé par radiation a un indice de fusion inférieur ou égal à 7, de préférence inférieur à 6.

7. Procédé de préparation d'un mélange de matériaux, destiné à des articles médicaux jetables qui sont soumis à une stérilisation par radiation, **caractérisé par** le mélange d'un matériau de polycarbonate résistant aux fissurations et d'un matériau de polycarbonate stabilisé par radiation, ledit matériau de polycarbonate résistant aux fissurations étant du type à décoloration croissante lorsqu'il est soumis à une irradiation, et
ledit matériau de polycarbonate stabilisé par radiation étant du type à coloration décroissante lorsqu'il est soumis à une irradiation, et devenant finalement incolore lorsqu'il est soumis à une dose de radiation de transparence,
ladite couleur du matériau de polycarbonate stabilisé par radiation est la couleur complémentaire de ladite décoloration ayant lieu dans le matériau résistant aux fissurations due à l'irradiation,
dans lequel ledit mélange de matériaux comprend lesdits matériaux, dans des proportions telles qu'une dose de radiation prédéterminée peut être choisie, ladite dose de radiation prédéterminée étant inférieure à ladite dose de radiation de transparence du matériau stabilisé par radiation, et étant telle que le mélange de matériaux, après une irradiation avec ladite dose de radiation prédéterminée, est plus transparent et plus incolore que l'un quelconque des matériaux de départ ne le serait après une irradiation avec la même dose de radiation prédéterminée.
